# EUROPÄISCHE PATENTSCHRIFT

(11) **EP 2 325 507 B1**
(45) Veröffentlichungstag und Bekanntmachung des Hinweises auf die Patenterteilung: **18.07.2012**
(21) Anmeldenummer: 10189610.8
(22) Anmeldetag: 02.11.2010
(51) Int. Cl.: F16C 23/08, F16C 33/54

(54) **Wälzlagerkäfig mit mittig verbreiterten Stegen**
Roller bearing cage with centrical broadened bars
Cage de palier de roulement avec traverses élargies au milieu

(30) Priorität: 21.11.2009 DE 102009054199
(43) Veröffentlichungstag der Anmeldung: 25.05.2011
(73) Patentinhaber: Schaeffler Technologies AG & Co. KG, 91074 Herzogenaurach (DE)
(72) Erfinder: Grehn, Martin, 97456, Dittelbrunn (DE); Schad, Sebastian, 97711, Volkershausen (DE)

(56) Entgegenhaltungen:
- DE-A1- 2 014 420
- FR-A- 998 867
- US-B1- 6 196 728

## Beschreibung

### Gebiet der Erfindung

Die Erfindung betrifft einen Wälzlagerkäfig, insbesondere für Pendelrollenlager, mit einer Vielzahl von Wälzkörpertaschen zur Aufnahme von Wälzkörpern, die durch zwei parallele Außenringe und zwischen den Außenringen ohne Abwinklung im Wesentlichen etwa axial verlaufende Stege gebildet sind, wobei die Stege Schnappnasen zum Einschnappen und Halten der Rollen in radialer Richtung aufweisen.

### Hintergrund der Erfindung

Ein Wälzlager umfasst normalerweise Wälzkörper, die zwischen Laufbahnen eines Innen- und eines Außenringes rotieren. Die Kraft, die ein Wälzlager aufnehmen kann, wird in der so genannten Tragzahl erfasst. Die Tragzahl hängt wesentlich von der Anzahl der Wälzkörper ab. So genannte vollrollige Wälzlager beinhalten die größtmögliche Anzahl an Wälzkörpern und bieten so ein theoretisches Tragzahlmaximum. Allerdings haben vollrollige Lager einige Nachteile. Beispielsweise können vollrollige Wälzlager nur bei niedrigen Drehzahlen eingesetzt werden, da die relativ hohe Reibung zwischen den sich berührenden Wälzkörpern nachteilig ist. Außerdem ist ein vollrolliges Lager relativ schwierig zu montieren. Um diese Nachteile zu vermeiden, wird üblicherweise ein Wälzlagerkäfig eingesetzt, der die Wälzkörper auf Abstand hält, dadurch vor allem die Reibung minimiert und die Montage vereinfacht. Der Einsatz eines Wälzlagerkäfigs geht notwendigerweise aber zu Lasten der erreichbaren Wälzkörperanzahl. Als herkömmliche Wälzlagerkäfige stehen beispielsweise Massivkäfige aus Messing zur Verfügung, die sich durch eine gute Bearbeitbarkeit und durch gute Kontakteigenschaften des Messingkäfigs mit den gewöhnlich eingesetzten Stahlwälzkörpern auszeichnet. Durch die geringe Materialsteifigkeit des Messings müssen allerdings die zwischen den Wälzkörpern verlaufenden Käfigstege relativ breit ausgeführt sein, so dass sich die Anzahl der Wälzkörper reduziert, wodurch im Ergebnis die Tragzahl verringert wird. Außerdem bieten die massiven Wälzlagerkäfige relativ wenig Platz für Schmiermittel des Lagers.

Bei so genannten Scheibenkäfigen ist eine im Außenring des Lagers aufgenommene Scheibe mit Ausbuchtungen zur Führung der Wälzkörper vorgesehen. Mit einem Scheibenkäfig können durch die relativ hohe Anzahl an Wälzkörpern vergleichsweise hohe Tragzahlen realisiert werden. Auch zeichnet sich ein Wälzlager mit einem Scheibenkäfig durch gute Reibungseigenschaft im Vergleich zum vollrolligen Wälzlager und durch hohe erlaubte Drehzahlen aus. Nachteilig ist aber, dass der Außenring des Lagers zur Führung des Scheibenkäfigs geteilt werden muss, wodurch erhöhte Herstellungskosten entstehen. Außerdem ist diese Käfigart beispielsweise nicht für eine Planetendirektlagerung geeignet.

Eine weitere Möglichkeit, die Wälzkörper im Wälzlager zu führen, ist der Einsatz von Zwischenstücken aus Kunststoff, die zwischen die Wälzkörper eingebracht sind. Auch hierdurch können relativ hohe Tragzahlen durch eine hohe Anzahl an Wälzkörpern realisiert werden. Ein Wälzlager mit Zwischenstücken weist gute Reibungseigenschaften auf und kann für hohe Drehzahlen eingesetzt werden. Durch relativ große Maßtoleranzen an den Kunststoffzwischenstücken ist diese Käfigart allerdings nur für kleine und mittlere Wälzlagergrößen geeignet.

Außer DE 10 2004 028 376 A1 ist ein Blechkäfig bekannt, der einstückig aus einem im Wesentlichen rollenförmigen Blech mit Aussparungen für die Wälzkörper gefertigt ist. Der Blechkäfig ist im Wälzlager ausschließlich radial unter- oder oberhalb des Wälzkörperteilkreises (Schwerpunktverbindung der Wälzkörper) angeordnet, was die Schmierstoffzufuhr erschwert, da eine Lauffläche des Lagerrings abgeschirmt wird. Insbesondere werden bei einem solchen Blechkäfig die Wälzkörper nicht verliersicher gehalten, wodurch eine Montagehilfe zum Einbau des Lagers benötigt wird.

Ein Wälzlagerkäfig nach dem Oberbegriff des Anspruchs 1 ist aus der FR 998867 A1, sowie der DE 198 81 885 C1 bekannt. Bei leizlerer handelt sich um einen zylindrischen Fensterkäfig für ein Nadellager, der die Lagernadeln in gleichmäßig voneinander durch Stege beabstandete Wälzkörpertaschen aufnimmt, die durch Ausstanzungen und durch einen Prägevorgang mit Materialverdrängung in einem Käfigband gebildet sind, so dass nach dem Rundbiegen des Käfigbandes die Lagernadeln nach innen durch die Neigung der Stegwände und nach außen durch Schnappnasen gehalten sind. Dabei sind die einander gegenüberliegenden Flächen der Stegwände einer Tasche im ungebogenen Zustand des Käfigbandes im Bereich der Haltevorsprünge aus drei Teilflächen derart gebildet, dass die ersten Teilflächen, bezogen auf eine Mittelsenkrechte, einen in Richtung Tasche weisenden, schrägen Verlauf nehmen, an ihrem oberen Ende in je eine parallel dazu verlaufende zweite Teilfläche übergehen, die in je einer dritten, ebenfalls in Richtung der Mittelsenkrechten geneigt schräg verlaufenen Teilfläche enden. Durch diese Art der Taschengestaltung, bei der die Halterung der Wälzkörper nach innen durch die Neigung der Stegwände und nach außen durch die Schnappnasen erfolgt, werden die Wälzkörper sicher geführt.

Dieser Wälzlagerkäfig hat sich in Verbindung mit Lagernadeln und relativ kleinen Wellendurchmesser bewährt, ist jedoch aufwendig herzustellen und weist verhältnismäßig breite und daher biegesteife Stege auf, so dass hohe Verformungskräfte erforderlich sind, um die Wälzkörper verliersicher in die Wälzkörpertaschen einzuschnappen. Diese Verformungskräfte müssen beim Einschnappen von den Rollen auf die Schnappnasen übertragen werden, wobei der Kontakt im Wesentlichen punktförmig ist und beim Einschnappen der Rollen ein Gleitkontakt mit den Schnappnasen auftritt, die bei hohen Kräften zu Oberflächenbeschädigungen an den Rollen führen können, insbesondere wenn die Käfige zusätzlich oberflächengehärtet sind. Dies gilt beispielsweise für Käfige für Pendelrollenlager aus Stahlblech.

### Aufgabe der Erfindung

Vor diesem Hintergrund liegt der Erfindung die Aufgabe zugrunde, einen Wälzlagerkäfig, insbesondere für Pendelrollenlager der eingangs erwähnten Art vorzuschlagen, der eine leichtere Montage mit geringem Kraftaufwand und ohne Beschädigung der Wälzkörperoberflächen ermöglicht.

### Zusammenfassung der Erfindung

Die Lösung dieser Aufgabe ergibt sich aus den Merkmalen des Hauptanspruchs, während vorteilhafte Weiterbildungen den Unteransprüchen entnehmbar sind.

Demnach geht die Erfindung aus von einem Wälzlagerkäfig, insbesondere für Pendelrollenlager, mit einer Vielzahl von Wälzkörpertaschen zur Aufnahme von Wälzkörpern, die durch zwei parallele Außenringe und zwischen den Außenringen ohne Abwinklung im Wesentlichen etwa axial verlaufende Stege gebildet sind, wobei die Stege Schnappnasen zum Einschnappen und Halten der Rollen in radialer Richtung aufweisen. Außerdem ist gemäß der Erfindung vorgesehen, dass die Stege etwa mittig zwischen den beiden Außenringen einen in Umfangsrichtung verbreiterten Stegbereich aufweisen.

Durch diese Konstruktion geben die Stege axial vor und hinter dem verbreiterten Stegbereich in der Ausweichrichtung leichter nach, so dass keine hohen Verformungskräfte entstehen und dementsprechend Oberflächenbeschädigungen an den Rollen vermieden werden.

Wenn die Stege über Stegfüße mit etwa der gleichen Breite wie die mittigen Stegbereiche an die Außenringe angebunden sind sowie die Stegbereiche zwischen den Stegfüßen und den mittigen, verbreiterten Stegbereichen im Umfangrichtung schmaler sind, ist eine sichere Führung der Rollen durch die Stegfüße und die mittigen Stegbereiche gewährleistet, während die Biegesteifigkeit durch die schmalen Stegbereiche vorteilhaft vermindert ist.

Vorzugsweise sind die schmaleren Stegbereiche durch in Umfangsrichtung angeordnete, kreisbogenförmige, ellipsenförmige oder logarithmische Ausnehmungen gebildet, die sich in einem Arbeitsgang mit den Wälzkörpertaschen durch Stanzen herstellen lassen, wenn der Wälzlagerkäfig aus Stahlblech gefertigt wird.

Um die Wälzkörper verlierungssicher im Wälzlagerkäfig zu halten, können die Stegfüße radial innen liegende Seitenkanten zum Halten und Führen von in die Wälzkörpertaschen eingeschnappten Rollen in Richtung nach radial innen aufweisen. Außerdem ist vorzugsweise vorgesehen, dass die mittigen, verbreiterten und in Umfangsrichtung elastisch verformbaren Stegbereiche die Schnappnasen zum Halten und Führen der Rollen in Richtung radial nach außen aufweisen.

In Verbindung mit Rollen für ein Pendelrollenlager ist es vorteilhaft, wenn wenigstens einer der Außenringe eine radiale nach innen oder außen gerichtete Abwinklung aufweist und/oder die Stege radial nach außen gewölbt geformt sind. Die Abwinklung erhöht die radiale Steifigkeit des Käfigs, während die Wölbung der Stege für einen vergrößerten radialen Abstand der Anlage der Rollen an den Seitenkanten der Stegfüße und an den Schnappnasen der mittigen, verbreiterten Stegbereiche sorgt.

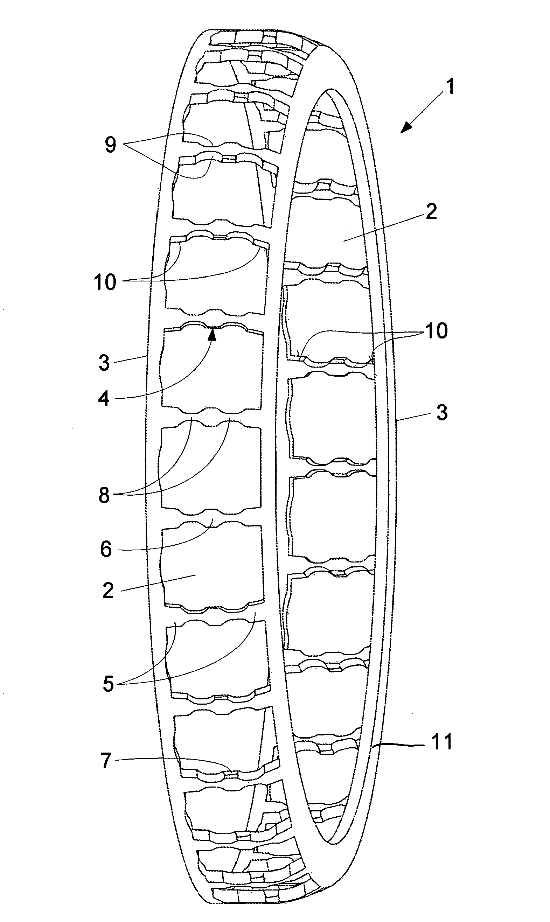

### Kurze Beschreibung der Zeichnung

Die Erfindung wird im Folgenden anhand der beiliegenden Zeichnung an einem Ausführungsbeispiel weiter erläutert, die eine perspektivische Ansicht des erfindungsgemäßen Wälzlagerkäfigs in Ausbildung für ein Pendelrollenlager zeigt.

### Detaillierte Beschreibung der Zeichnung

Ein erfindungsgemäßer Wälzlagerkäfig 1, der für ein Pendelrollenlager bestimmt ist, weist eine Vielzahl von Wälzkörpertaschen 2 auf, die durch parallele Außenringe 3 und diese verbindende Stege 4 gebildet sind. Die Stege 4 sind durch Stegfüße 5 an die Außenringe 3 angebunden und weisen mittige, umfangsbezogen verbreiterte Bereiche 6 auf, die an ihren Seitenflächen mit Schnappnasen 7 versehen sind. Zwischen den Stegfüßen 5 und den verbreiterten Bereichen 6 der Stege 4 sind schmalere Stegbereiche 8 vorgesehen, die durch Ausnehmungen 9 gebildet sind. Die Ausnehmungen können kreisbogenförmig, ellipsenbogenförmig oder einer logarithmischen Geometrie folgend ausgebildet sein.

Die in die Wälzkörpertaschen 2 eingeschnappten, hier nicht dargestellten Wälzkörper werden in radialer Richtung nach innen durch innere Seitenkanten 10 an den Stegfüßen 5 und in radialer Richtung nach außen durch die Schnappnasen 7 an den verbreiterten Bereichen 6 verliersicher gehalten, so dass sich die Wälzkörper im Wälzlagerkäfig 1 vormontieren lassen und sich dann als Ganzes zwischen die nicht dargestellten Außen- und Innenringe des Wälzlagers einsetzen lassen.

Zur Erhöhung der Steifigkeit des Wälzlagerkäfigs 1 in radialer Richtung weist wenigstens einer der Außenringe 3 eine radiale Abwinklung 11 auf.

Des Weiteren sind die Stege wie dargestellt nach außen gewölbt geformt, wodurch der radiale Abstand zwischen den Schnappnasen 7 und den Seitenkanten 10 vergrößert ist und eine bessere Führung und Halterung der Wälzkörper im Wälzlagerkäfig 1 gewährleistet ist, insbesondere, wenn der Wälzlagerkäfig 1 aus verhältnismäßig dünnem Stahlblech besteht und zur Halterung und Führung von Tonnenrollen dienen soll.

### Bezugszeichenliste

- 1: Wälzlagerkäfig
- 2: Wälzkörpertaschen
- 3: Außenringe
- 4: Stege
- 5: Stegfüße
- 6: Mittige, verbreiterte Stegbereiche
- 7: Schnappnasen
- 8: Schmalere Stegbereiche
- 9: Ausnehmungen
- 10: Seitenkanten
- 11: Radiale Abwinklung am Außenring

## Patentansprüche

1. Wälzlagerkäfig (1), insbesondere für Pendelrollenlager, mit einer Vielzahl von Wälzkörpertaschen (2) zur Aufnahme von Wälzkörpern, die durch zwei parallele Außenringe (3) und zwischen den Außenringen (3) ohne Abwinklung im Wesentlichen etwa axial verlaufende Stege (4) gebildet sind, wobei die Stege (4) Schnappnasen (7) zum Einschnappen und Halten der Rollen in radialer Richtung aufweisen, **dadurch gekennzeichnet, dass** die Stege (4) etwa mittig zwischen den beiden Außenringen (3) einen in Umfangsrichtung verbreiterten Stegbereich (6) aufweisen.

2. Wälzlagerkäfig nach Anspruch 1, **dadurch gekennzeichnet, dass** die Stege (4) über Stegfüße (5) mit etwa der gleichen Breite wie die mittigen Stegbereiche (6) an die Außenringe (3) angebunden sind, und dass die Stegbereiche (8) zwischen den Stegfüßen (5) sowie den mittigen, verbreiterten Stegbereichen (6) in Umfangrichtung schmaler sind.

3. Wälzlagerkäfig nach Anspruch 1 oder 2, **dadurch gekennzeichnet, dass** die schmaleren Stegbereiche (8) durch in Umfangsrichtung angeordnete, kreisbogenförmige, ellipsenförmige oder logarithmische Ausnehmungen (9) gebildet sind.

4. Wälzlagerkäfig nach einem der Ansprüche 1 bis 3, **dadurch gekennzeichnet, dass** er aus Stahlblech gefertigt ist.

5. Wälzlagerkäfig nach einem der Ansprüche 1 bis 4, **dadurch gekennzeichnet, dass** wenigstens einer der Außenringe (3) eine radiale, nach innen oder außen gerichtete Abwinklung (11) aufweist.

6. Wälzlagerkäfig nach einem der Ansprüche 1 bis 5, **dadurch gekennzeichnet, dass** die Stege (4) radial nach außen gewölbt geformt sind.

7. Wälzlagerkäfig nach einem der Ansprüche 1 bis 6, **dadurch gekennzeichnet, dass** die Stegfüße (5) radial innen liegende Seitenkanten (10) zum Halten und Führen von in die Wälzkörpertaschen (2) eingeschnappten Rollen in Richtung radial nach innen aufweisen.

8. Wälzlagerkäfig nach einem der Ansprüche 1 bis 7, **dadurch gekennzeichnet, dass** die mittigen, verbreiterten und in Umfangsrichtung elastisch verformbaren Stegbereiche (6) Schnappnasen (7) zum Halten und Führen der Rollen in Richtung radial nach außen aufweisen.

## Claims

1. Rolling bearing cage (1), in particular for spherical roller bearings, having a multiplicity of rolling body pockets (2) for receiving rolling bodies, said rolling body pockets being formed by two parallel outer rings (3) and by webs (4) which run substantially approximately axially, without a bend, between the outer rings (3), the webs (4) having snap-in lugs (7) for the snapping-in and holding of the rollers in the radial direction, **characterized in that** the webs (4) have, approximately centrally between the two outer rings (3), a web region (6) which is broadened in the circumferential direction.

2. Rolling bearing cage according to Claim 1, **characterized in that** the webs (4) are connected to the outer rings (3) via web feet (5) of approximately the same width as the central web regions (6), and **in that** the web regions (8) between the web feet (5) and the central broadened web regions (6) are narrower in the circumferential direction.

3. Rolling bearing cage according to Claim 1 or 2, **characterized in that** the narrower web regions (8) are formed by circular-arc-shaped, elliptical or logarithmic recesses (9) arranged in the circumferential direction.

4. Rolling bearing cage according to one of Claims 1 to 3, **characterized in that** it is produced from sheet steel.

5. Rolling bearing cage according to one of Claims 1 to 4, **characterized in that** at least one of the outer rings (3) has a radial inwardly or outwardly directed angled portion (11).

6. Rolling bearing cage according to one of Claims 1 to 5, **characterized in that** the webs (4) are of radially outwardly curved form.

7. Rolling bearing cage according to one of Claims 1 to 6, **characterized in that** the web feet (5) have side edges (10), situated radially at the inside, for holding and guiding rollers, which have been snapped into the rolling body pockets (2), in the radially inward direction.

8. Rolling bearing cage according to one of Claims 1 to 7, **characterized in that** the central broadened web regions (6) which are elastically deformable in the circumferential direction have snap-in lugs (7) for holding and guiding the rollers in the radially outward direction.

## Revendications

1. Cage de palier à roulement (1), notamment pour palier à roulement articulé, comprenant une pluralité de cavités pour corps de roulement (2) destinées à recevoir des corps de roulement, qui sont formées par deux bagues extérieures parallèles (3) et par des nervures (4) s'étendant essentiellement approximativement axialement entre les bagues extérieures (3) sans coudage, les nervures (4) présentant des ergots d'encliquetage (7) pour l'encliquetage et la rétention des rouleaux dans la direction radiale, **caractérisée en ce que** les nervures (4) présentent, approximativement centralement entre les deux bagues extérieures (3) une région de nervure (6) élargie dans la direction périphérique.

2. Cage de palier à roulement selon la revendication 1, **caractérisée en ce que** les nervures (4) sont reliées, par des bases de nervures (5) ayant approximativement la même largeur que les régions de nervures centrales (6), aux bagues extérieures (3), et **en ce que** les régions de nervures (8) entre les bases de nervures (5) et les régions de nervures centrales élargies (6) sont plus étroites dans la direction périphérique.

3. Cage de palier à roulement selon la revendication 1 ou 2, **caractérisée en ce que** les régions de nervures (8) plus étroites sont formées par des évidements (9) disposés dans la direction périphérique, en forme d'arc de cercle, d'ellipse, ou logarithmiques.

4. Cage de palier à roulement selon l'une quelconque des revendications 1 à 3, **caractérisée en ce qu'**elle est fabriquée en tôle d'acier.

5. Cage de palier à roulement selon l'une quelconque des revendications 1 à 4, **caractérisée en ce qu'**au moins l'une des bagues extérieures (3) présente un coudage (11) radiale orienté vers l'intérieur ou vers l'extérieur.

6. Cage de palier à roulement selon l'une quelconque des revendications 1 à 5, **caractérisée en ce que** les nervures (4) sont formées de manière cintrée radialement vers l'extérieur.

7. Cage de palier à roulement selon l'une quelconque des revendications 1 à 6, **caractérisée en ce que** les bases de nervures (5) présentent des arêtes latérales situées radialement à l'intérieur (10) pour retenir et guider des rouleaux encliquetés dans les cavités de corps de roulement (2) dans une direction radialement vers l'intérieur.

8. Cage de palier à roulement selon l'une quelconque des revendications 1 à 7, **caractérisée en ce que** les régions de nervures (6) centrales, élargies et déformables élastiquement dans la direction périphérique présentent des ergots d'encliquetage (7) pour retenir et guider les rouleaux dans une direction radialement vers l'extérieur.
